# EUROPÄISCHE PATENTSCHRIFT

(11) **EP 1 632 773 B1**
(45) Veröffentlichungstag und Bekanntmachung des Hinweises auf die Patenterteilung: **13.08.2008**
(21) Anmeldenummer: 05450146.5
(22) Anmeldetag: 01.09.2005
(51) Int. Cl.: G01N 27/49

(54) **Verfahren zur Detektion einer Gasblase in einer wässrigen Flüssigkeit**
Method of detecting a gas bubble in an aqueous liquid
Méthode pour détecter une bulle de gaz dans un liquide aqueux

(30) Priorität: 02.09.2004 AT 14672004
(43) Veröffentlichungstag der Anmeldung: 08.03.2006
(73) Patentinhaber: F. Hoffmann-La Roche AG, 4070 Basel (CH); Roche Diagnostics GmbH, 68305 Mannheim (DE)
(72) Erfinder: Kaltenbeck, Heinz, Dipl.-Ing., 8010 Graz (AT); Grübler, Robert, Dr., 8042 Graz (AT); Landschützer, Egon, Ing., 8051 Graz (AT)
(74) Vertreter: Babeluk, Michael

(56) Entgegenhaltungen:
- EP-A- 1 394 534
- EP-A- 1 505 381
- US-A- 4 358 423
- US-B1- 6 773 577
- ATEYA ET AL: "Impedance-based response of an electrolytic gas bubble to pressure in microfluidic channels" SENSORS AND ACTUATORS A, ELSEVIER SEQUOIA S.A., LAUSANNE, CH, Bd. 122, Nr. 2, 26. August 2005 (2005-08-26), Seiten 235-241, XP005006221 ISSN: 0924-4247
- PARK J ET AL: "A simple on-chip self-diagnosis/self-calibration method of oxygen microsensor using electrochemically generated bubbles" SENSORS AND ACTUATORS B, ELSEVIER SEQUOIA S.A., LAUSANNE, CH, Bd. 108, Nr. 1-2, 22. Juli 2005 (2005-07-22), Seiten 633-638, XP004928527 ISSN: 0925-4005
- MAISONHAUTE E ET AL: "Microelectrode study of single cavitational bubbles induced by 500 kHz ultrasound" ULTRASONICS: SONOCHEMISTRY, BUTTERWORTH-HEINEMANN, GB, Bd. 9, Nr. 5, Oktober 2002 (2002-10), Seiten 275-283, XP004379275 ISSN: 1350-4177

## Beschreibung

Die Erfindung betrifft ein Verfahren zur Detektion einer Gasblase, vorzugsweise einer Luftblase, in einer wässrigen Flüssigkeit, vorzugsweise einer Kalibrier-, Kontroll- oder Probenflüssigkeit, welche Gasblase sich in zumindest teilweisem Kontakt mit dem sensitiven Bereich eines in einer Messkammer angeordneten, amperometrischen Sensors zur Bestimmung der Konzentration einer in der Flüssigkeit gelösten Gaskomponente befindet.

In der klinischen Diagnostik werden Analysesysteme zur Blutgasanalyse oder zu sonstigen Messungen an in flüssiger Form vorliegenden Proben verwendet. Solche Systeme werden beispielsweise zur Bestimmung des Sauerstoff- oder Kohlendioxidpartialdrucks von Blut, der Hämoglobinparameter von Vollblut sowie des pH-Werts oder der Konzentration von Ionen oder speziellen Metaboliten eingesetzt.

Solche komplexen Analysesysteme besitzen zur Bestimmung der jeweiligen Parameter häufig verschiedene sensorische Elemente, welche für viele Bestimmungen eingesetzt werden. Solche sensorischen Elemente sind beispielsweise elektrochemische oder optische Sensoren zur Bestimmung der Gaswerte, des pH-Wertes, der Ionenwerte und der Metabolitwerte oder optische Messeinheiten zur Bestimmung der Hämoglobinwerte.

Die US 3,874,850 A (Sorensen et al.) beschreibt ein solches Analysesystem zur Blutanalyse. Dieses System weist mehrere sensorische Elemente auf, welche zur Bestimmung des pH-Wertes, der Partialdrücke von Sauerstoff und Kohlendioxid und des Hämoglobingehaltes einer Blutprobe dienen. Diese sensorischen Elemente sind durch ein komplexes fluidisches System aus verschiedensten fluidischen Bauteilen wie Schläuchen, Vorrats- und Abfallbehältern, Pumpen oder Ventilen verbunden, wobei bei diesem System die Probe mit Hilfe von Spritzen oder Kapillaren vom Patienten zum Analysesystem transportiert wird.

Bei elektrochemischen Gassensoren, auch gasselektive oder gassensitive Elektroden genannt, diffundieren die zu bestimmenden Gasmoleküle durch eine gasdurchlässige und weitgehend flüssigkeits- und ionenundurchlässige Membran aus einer zumeist wässrigen Außenlösung oder auch einer Gasphase in der Innenelektrolytraum des Sensors. Dieser Innenelektrolytraum enthält neben einer flüssigen oder festen Innenelektrolytschicht auch Elektroden zur elektrochemischen Bestimmung des Gases, insbesondere Mess- oder Arbeitselektroden, Gegenelektroden oder Referenzelektroden. In diesem Innenelektrolytraum laufen die eigentlichen elektrochemischen Nachweisreaktionen zur Bestimmung des Gases mittels amperometrischer Methoden ab.

Ein häufig eingesetzter Gassensor ist beispielsweise der Sauerstoffsensor nach Clark. Hier trennt eine gaspermeable Membran die Innenelektrolytlösung vom wässrigen Außenmedium, dem Messmedium. In die Innenelektrolytlösung tauchen im einfachsten Fall zwei Elektroden ein, von denen eine als Arbeitselektrode dicht hinter der Membran angeordnet ist. Nach Anlegen einer Polarisationsspannung geeigneter Höhe wird der aus dem Messmedium durch die Membran in den Innenelektrolytraum diffundierte Sauerstoff an der Arbeitselektrode durch elektrochemische Reduktion verbraucht und es fließt ein dem Stoffumsatz entsprechender Strom. Dieser Strom ist proportional zum Sauerstoffpartialdruck im Messmedium und stellt die primäre Messgröße dar.

Weitere verbreitete elektrochemische Gassensoren, welche solche gasdurchlässigen Membranen besitzen, sind beispielsweise elektrochemische Sensoren zur Bestimmung von Wasserstoff mittels Oxidation an Platinelektroden.

Solche elektrochemischen Gassensoren werden häufig in medizinischen und diagnostischen Analysesystemen zur Bestimmung von Gaspartialdrücken beziehungsweise von Gaskonzentrationen in Flüssigkeiten eingesetzt. Insbesondere werden derartige elektrochemischen Gassensoren in Blutgasanalysatoren eingesetzt, welche in der Diagnostik eine große Rolle spielen. Blutgasanalysatoren wiesen oft mehrere hintereinander geschaltete Sensoren für verschiedene Parameter auf. Die Probenflüssigkeit fließt durch den Messkanal einer Messkammer, die diese Sensoren enthält, wobei die Messung häufig im so genannten "Stop-Flow-Verfahren" mit zum Zeitpunkt der Messung ruhender Probe erfolgt. Solche Systeme werden oft im Routinebetrieb in Krankenhäusern, Laboratorien und Praxen eingesetzt, so dass an die darin enthaltenen Sensoren hohe Ansprüche bezüglich Lebensdauer, Genauigkeit und Reproduzierbarkeit gestellt werden.

So werden beispielsweise zur Sauerstoffbestimmung in den OMNI-Analysesystemen der Roche Diagnostics GmbH amperometrische Sauerstoffsensoren eingesetzt. Bei den Sauerstoffsensoren handelt es sich um miniaturisierte Gassensoren vom Clark-Typ. Diese dort eingesetzten Gassensorelemente umfassen neben dem eigentlichen Sensor mit Innenelektrolytraum und den darin befindlichen Elektroden einen Probenkanal zum Transport und zur Bereitstellung der Probe. Zwischen Innenelektrolytraum und Probenkanal befindet sich eine gasdurchlässige und weitgehend ionen- und flüssigkeitsundurchlässige Kunststoff-Membran, welche Innenelektrolytraum und Probenkanal trennt. Die Membran liegt hier in einem mechanisch aufgespannten Zustand vor.

Häufig werden in elektrochemischen Gassensoren dünne Membranen aus Kunststoffen mit Schichtdicken im Mikrometerbereich aus hydrophoben Kunststoffen eingesetzt, insbesondere aus Polytetrafluorethylen, Polypropylen oder Polyethylen. Weitere Angaben zu bevorzugten Membranmaterialien sind in "Measurement of Oxygen by Membrane-covered Probes" (Ellis Horwood series in analytical chemistry), 1988, Ellis Horwood Limited, Seite 91f. zu finden.

Bei der Bestimmung von gasförmigen Analyten in wässrigen Lösungen mittels elektrochemischer Gassensoren, insbesondere in physiologischen Flüssigkeiten wie beispielsweise Vollblut, Serum oder Harn, können in wenigen seltenen Fällen Probleme bei der Probenmessung bzw. bei der Kalibrierung oder Qualitätskontrolle auftreten, wenn die Probe bzw. das Qualitätskontroll- oder Kalibriermittel den Probenkanal nur unvollständig füllt oder wenn sich in der Lösung im Bereich der Sensoren Gasblasen, beispielsweise Luftblasen, befinden. Insbesondere bei Blutgasanalysesystemen mit Sensorelementen für kleine Probenvolumina können Gasblasen zu Fehlmessungen führen, so dass im Hinblick auf das Vorhandensein oder Fehlen von Gasblasen eine wirksame Überprüfung durchgeführt werden muss. Gasblasen bleiben vorzugsweise an der Membranoberfläche hängen. Dieses Phänomen wird beobachtet, wenn beim Befüllvorgang des Probenkanals die wässrige Flüssigkeit der hydrophoben Oberfläche der Membran ein- oder beidseitig ausweicht. Hat die Flüssigkeitsfront die Möglichkeit, seitlich an der Membran vorbeizulaufen, noch bevor diese vollständig mit der Flüssigkeit bedeckt ist, bildet sich eine Gasblase im Bereich der Membran. Sowohl bereits existierende als auch neu gebildete Gasblasen bleiben bevorzugt an der Membran hängen und werden oft auch durch eine Flüssigkeitsströmung nicht mitgerissen. Eine an der Membran haftende bzw. in unmittelbarer Umgebung der Membran befindliche Gasblase hat eine Fehlmessung zur Folge, die ohne zusätzliche Maßnahmen zur Detektion der Gasblase nicht erkannt wird.

So wird bereits in der US 4,358,423 A (Nedetzky) auf das Problem von eingeschlossenen Luftblasen hingewiesen, welche das Messresultat verfälschen, da die Luftblasen eine ausreichende Benetzung der Oberfläche der jeweils eingesetzten Sensoren verhindern. Maßnahmen, die einen derartigen Fehler erkennen, sind insbesondere bei automatisch arbeitenden Analysatoren notwendig, bei welchen der Füllvorgang der Messkapillare bzw. die Blasenfreiheit der Probe in der Messkammer automatisch kontrolliert werden muss. In der US 4,358,423 wird zur Lösung des Problems ein Verfahren vorgeschlagen, bei welchem der Wert des elektrischen Widerstandes zwischen wenigstens zwei Stellen in der Messkammer gemessen wird, wobei der Füllvorgang der Messkammer in Abhängigkeit der festgestellten Größe des gemessenen Widerstandes gesteuert wird.

Mit dem beschriebenen Verfahren können allerdings Luftblasen, die den Querschnitt des Messkanals bzw. der Messkapillare nur teilweise ausfüllen, nicht wirksam detektiert werden. Die Widerstandsmessung würde in einem derartigen Fall zwar geringfügige Unterschiede im Messsignal aufzeigen, welche allerdings von Signaländerungen basierend auf unterschiedlicher Leitfähigkeit der einzelnen Proben - bedingt durch z.B. unterschiedliche Hämatokritwerte - nicht unterschieden werden können.

Aus der EP 1 394 534 A2 ist Verfahren und eine Vorrichtung zur Überprüfung der Positionierung und der Blasenfreiheit einer medizinischen Mikroprobe in einer Durchflussmesszelle eines Analysators mit Hilfe einer an die Messzelle angelegten Wechselspannung bekannt. Die Messzelle weist mehrere hintereinander angeordnete Elektrodenanordnungen mit jeweils mehreren Einzelelektroden (Arbeits-, Referenz- und Gegenelektrode) zur Messung eines Inhaltsstoffes der Mikroprobe mit Hilfe einer Messspannung (im Wesentlichen eine Gleichspannung) auf. Zur genauen Lokalisation der Mikroprobe bzw. zur Detektion von Luftblasen im Bereich jeder Elektrodenanordnung erfolgt sowohl die Einkopplung der Wechselspannung als auch die Einkopplung der Messspannung direkt und gleichzeitig über die Einzelelektroden der jeweiligen Elektrodenanordnung und der gemessene Wechselstromanteil bzw. die Impedanz ist ein Maß für die Position der Mikroprobe und deren Blasenfreiheit. Nachteilig ist auch hier, dass sehr kleine Luftblasen nicht wirksam detektiert werden können

Aus der EP 0 484 876 B1 ist eine Einrichtung zum dynamischen Messen des Blasengehalts einer fließenden Flüssigkeit bekannt, welche eine Einrichtung zum Messen des Druckes, der Temperatur und der volumetrischen Durchflussrate der Flüssigkeit aufweist, wobei die Durchflussrate zwischen Punkten eines hohen und eines niedrigen Druckes gemessen und daraus der Blasengehalt der Flüssigkeit berechnet wird. Das Verfahren nützt im Wesentlichen die aus der Druckänderung resultierende Volumsänderung der Flüssigkeit aus, welche abhängig vom Blasengehalt ist.

Aus der WO 01/33195 A1 ist schließlich ein Verfahren und eine Vorrichtung zur Blasendetektion in einer Flüssigkeit bekannt geworden, bei welcher sich die Flüssigkeit beispielsweise in Kontakt mit einem pO₂- Sensor befindet. Zur Überprüfung, ob eine Gasblase im Bereich des Sensors vorliegt, wird nun bei einem ersten Druckwert in der Messkammer ein erster Messwert für den O₂ Partialdruck durchgeführt und anschließend der Druck auf einen zweiten Druckwert in der Messkammer geändert. Auch bei diesem zweiten Druckwert wird der O₂ Partialdruck gemessen und ein zweiter Messwert erstellt. Dieser zweite Messwert wird mit einem Erwartungswert beim geänderten Druck verglichen und je nach Differenz der beiden Werte auf das Vorhandensein von Gasblasen geschlossen. Bei Druckminderung kommt es zu einer Signalerniedrigung infolge der Verminderung des O₂ Partialdrucks der Gasblase. Bei Druckerhöhung kommt es zu einer entsprechenden Signalerhöhung infolge der Erhöhung des O₂ Partialdrucks der Gasblase. Nachteilig dabei ist die Notwendigkeit der genauen Einstellung zweier Druckwerte in der Messkammer.

Aufgabe der vorliegenden Erfindung ist es, ein Verfahren zur Detektion einer Gasblase, welche sich in zumindest teilweisem Kontakt mit dem sensitiven Bereich eines in einer Messkammer angeordneten, amperometrischen Sensors befindet derart zu verbessern, dass auch sehr kleine Gasblasen ohne zusätzliche Um- oder Einbauten in der Messkammer eindeutig detektiert werden können, sodass geeignete Maßnahmen eingeleitet werden können.

Diese Aufgabe wird erfindungsgemäß dadurch gelöst:
- dass die Flüssigkeit in der Messkammer positioniert und nach einer vorgegebenen Einstellzeit von einem ersten Teil der Flüssigkeit, welcher sich im sensitiven Bereich des amperometrischen Sensors befindet, mit einer amperometrischen Messung zumindest ein erster Messwert der zu bestimmenden Gaskomponente erfasst wird,
- dass die Flüssigkeit in der Messkammer weiterbewegt wird, so dass ein zweiter, vorher außerhalb des sensitiven Bereichs des amperometrischen Sensors liegender (unverbrauchter) Teil der Flüssigkeit in dessen sensitiven Bereich positioniert wird, wobei mit einer amperometrischen Messung zumindest ein zweiter Messwert der zu bestimmenden Gaskomponente erfasst wird und
- dass aus der Differenz der Messwerte der zu bestimmenden Gaskomponente auf das Vorliegen oder Fehlen einer Gasblase geschlossen wird.

Insbesondere kann bei einem Anstieg des zweiten Messwertes im Vergleich zum ersten Messwert um eine vorbestimmten Wert auf eine blasenfreie Flüssigkeit im Bereich des amperometrischen Sensors geschlossen werden.

Das erfindungsgemäße Verfahren nutzt die eingangs erwähnte Tatsache, dass amperometrische Gassensoren den Analyten verbrauchen. Dabei wird vorausgesetzt, dass die vom amperometrischen Sensor zu bestimmende Gaskomponente Bestandteil der zu detektierenden Gasblase ist.

Ist beispielsweise die sich in unmittelbarer Nähe eines amperometrischen O₂-Sensors befindliche Flüssigkeit frei von O₂-hältigen Gasblasen, kommt es - bedingt durch den O₂-Verbrauch des Sensors - während der Messung über die Zeit zu einer O₂-Verarmung der in unmittelbarer Nähe des Sensors befindlichen Flüssigkeit und damit zu einer Abnahme des amperometrischen Signals. Bewegt man nun die Flüssigkeit kommt es zu einem Anstieg des amperometrischen Signals um einen bestimmtem Wert, welcher Anstieg bei Vorhandensein einer Gasblase entfällt.

Erfindungsgemäß kann der zweite Teil der Flüssigkeit bei einlass- und auslassseitig offener Messkammer ohne wesentliche Druckänderung, vorzugsweise mit Hilfe einer Pump- oder Saugeinrichtung, vor den sensitiven Bereich des amperometrischen Sensors bewegt werden. Dadurch wird vermieden, dass sich im System befindliche drucksensitive Komponenten (z.B. die Membranen der Sensoren) belastet werden. Ferner sind die Anforderungen an die Dichtigkeit des Systems weniger streng.

Die Erfindung wird im Folgenden anhand von schematischen Darstellungen und Diagrammen näher erläutert. Es zeigen:
- Fig. 1a und Fig. 1b: schematisch eine Messanordnung zur Durchführung des erfindungsgemäßen Verfahrens mit einer blasenfreien Messflüssigkeit;
- Fig. 2a und Fig. 2b: die Messanordnung nach Fig. 1a und Fig. 1b mit einer Gasblase im Bereich des amperometrischen Sensors; und
- Fig. 3: den Verlauf des Sensorsignals für ein Messbeispiel.

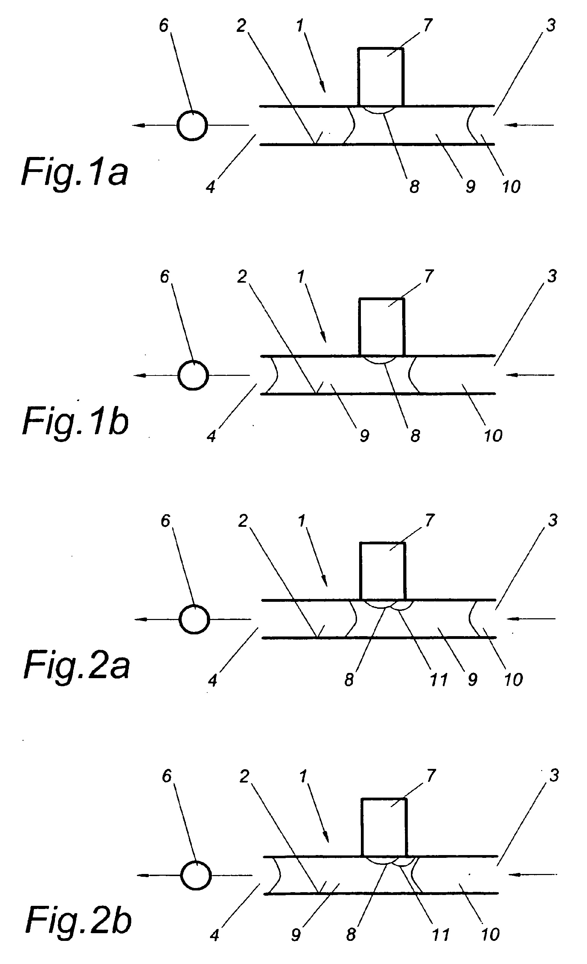

Die in den Fig. 1a bis Fig. 2b schematisch dargestellte Messanordnung weist eine Messkammer 1 mit einem durchgehenden Probenkanal 2 auf, dessen Einlassöffnung mit 3 bezeichnet ist. An der Auslassöffnung 4 des Probenkanals 2 befindet sich eine Pump- oder Saugeinrichtung 6, beispielsweise eine Peristaltikpumpe. Im Probenkanal 2 können mehrere unterschiedliche, elektrochemische Sensoren angeordnet sein, zumindest jedoch ein amperometrischer Sensor 7, beispielsweise ein O₂-Sensor, dessen sensitiver Bereich 8 in den Probenkanal 2 und in die dort befindliche Messflüssigkeit 9 (z.B. Kalibrier-, Kontroll- oder Probenflüssigkeit) ragt. Die Messflüssigkeit 9 ist einlassseitig durch eine Trenngasblasen 10 von einer nachfolgenden Flüssigkeitsprobe abgegrenzt.

In den Fig. 1a und Fig. 1b ist die Messsituation ohne störende Gasblase im sensitiven Bereich 8 des Sensors 7 dargestellt, in den Fig. 2a und Fig. 2b mit einer Gasblase 11 in zumindest teilweisem Kontakt mit dem sensitiven Bereich 8 des amperometrischen Sensors 7. In beiden Fällen kann die Messflüssigkeit 9 ohne wesentliche Druckänderungen in der Flüssigkeit 9, beispielsweise mit Hilfe der Pump- oder Saugeinrichtung 6, von einer ersten Position (siehe Fig. 1a bzw.
Fig. 2a) in eine zweite Position (siehe Fig. 1b bzw. Fig. 2b) verschoben werden, so dass ein zweiter, vorher außerhalb des sensitiven Bereichs des amperometrischen Sensors liegender, unverbrauchter Teil der Flüssigkeit 9 im sensitiven Bereich 8 des amperometrischen Sensors 7 positioniert wird.

Bei der Messsituation gemäß Fig. 2a und Fig. 2b ist erkennbar, dass sich die störende Gas- bzw. Luftblase 11 trotz der Verschiebung der Flüssigkeit 9 in Richtung Auslassöffnung 4 nicht weiterbewegt und am sensitiven Bereich 8 des Sensors 7 haften bleibt.

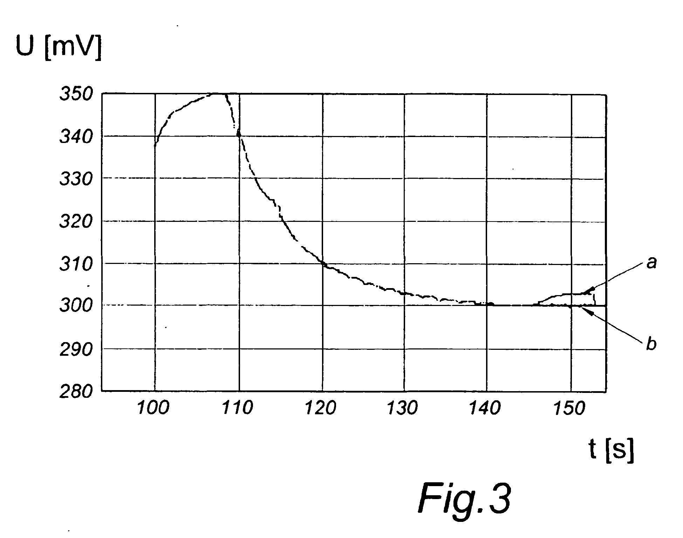

Im Messbeispiel gemäß Fig. 3 wird eine zur O₂ Konzentration einer Flüssigkeit, beispielsweise einer Blutprobe, proportionale Spannung U (in mV) in Abhängigkeit der Zeit t (in s) dargestellt. Dabei wird das amperometrische Signal an einem Strom/Spannungswandler abgegriffen und in Form einer dem Strom proportionalen Spannung gemessen.

Wird z.B. die Flüssigkeit in die Messkammer eingebracht und unmittelbar nach dem Einbringen das Sensorsignal über die Zeit t gemessen, repräsentiert der Signalverlauf die Überlagerung von zwei unterschiedlichen Prozessen: 1) das Ansprechen des Sensors auf den O₂-Wert der eingebrachten Flüssigkeit, wobei der durch diesen Prozess bedingte Signalverlauf bis zur Einstellung eines Gleichgewichts abnimmt und 2) den inhärenten O₂-Verbrauch des amperometrischen O₂-Sensors, gekennzeichnet durch ein stetig über die Zeit abnehmendes Signal. Ein stabiles Signal stellt sich nach ca. 30 s ein.

Wird nun die Flüssigkeit in der Messkammer, beispielsweise mit Hilfe der Pump-oder Saugeinrichtung, weiterbewegt, sodass die in unmittelbarer Umgebung des Sensors befindliche Flüssigkeit durch neue Flüssigkeit derselben Probe mit dem ursprünglichen (unverbrauchten) O₂ Gehalt ersetzt wird, so kommt es (in einem begrenzten Zeitfenster von ca. 10 bis 20 s) zu einem messbaren Signalanstieg (siehe Kurve a in Fig. 3).

Haftet im sensitiven Bereich 8 des Sensors 7 eine Gasblase 11 (z.B. Luft) - wie in den Fig. 2a bis Fig. 2b dargestellt - so ist die durch den O₂-Verbrauch bedingte Signalabnahme über die Zeit t im Vergleich zu einer blasenfreien Flüssigkeit wesentlich geringer. Letzteres ist dadurch bedingt, dass unter Normalbedingungen eine Luftblase um einen erheblichen Faktor mehr Sauerstoff enthält, als wässrige Flüssigkeiten gleichen Volumens.

Trotz des Flüssigkeitstransports bleibt die Gasblase 11 im sensitiven Bereich 8 unverändert haften, wobei die in unmittelbarer Nähe des Sensors 7 befindliche Flüssigkeit durch neue ersetzt bzw. teilweise verdrängt wird. Infolge der durch die Gasblase 11 bereitgestellten, unverändert großen Menge an O₂ bleibt der Signalanstieg aus (siehe Kurve b in Fig. 3).

## Patentansprüche

1. Verfahren zur Detektion einer Gasblase, vorzugsweise einer Luftblase, in einer wässrigen Flüssigkeit, vorzugsweise einer Kalibrier-, Kontroll- oder Probenflüssigkeit, welche Gasblase sich in zumindest teilweisem Kontakt mit dem sensitiven Bereich eines in einer Messkammer angeordneten, amperometrischen Sensors zur Bestimmung der Konzentration einer in der Flüssigkeit gelösten Gaskomponente befindet, **dadurch gekennzeichnet,**
- **dass** die Flüssigkeit in der Messkammer positioniert und nach einer vorgegebenen Einstellzeit von einem ersten Teil der Flüssigkeit, welcher sich im sensitiven Bereich des amperometrischen Sensors befindet, mit einer amperometrischen Messung zumindest ein erster Messwert der zu bestimmenden Gaskomponente erfasst wird,
- **dass** die Flüssigkeit in der Messkammer weiterbewegt wird, so dass ein zweiter, vorher außerhalb des sensitiven Bereichs des amperometrischen Sensors liegender Teil der Flüssigkeit in dessen sensitiven Bereich positioniert wird, wobei mit einer amperometrischen Messung zumindest ein zweiter Messwert der zu bestimmenden Gaskomponente erfasst wird und
- **dass** aus der Differenz der Messwerte der zu bestimmenden Gaskomponente auf das Vorliegen oder Fehlen einer Gasblase geschlossen wird.

2. Verfahren nach Anspruch 1, **dadurch gekennzeichnet, dass** bei einem Anstieg des zweiten Messwertes im Vergleich zum ersten Messwert um eine vorbestimmten Wert auf eine blasenfrei Flüssigkeit im Bereich des amperometrischen Sensors geschlossen wird.

3. Verfahren nach Anspruch 1 oder 2, **dadurch gekennzeichnet, dass** der zweite Teil der Flüssigkeit bei einlass- und auslassseitig offener Messkammer ohne wesentliche Druckänderung, vorzugsweise mit Hilfe einer Pump-oder Saugeinrichtung, vor den sensitiven Bereich des amperometrischen Sensors bewegt wird.

4. Verfahren nach einem der Ansprüche 1 bis 3, **dadurch gekennzeichnet, dass** der amperometrische Sensor ein O₂-Sensor ist.

5. Verfahren nach einem der Ansprüche 1 bis 4, **dadurch gekennzeichnet, dass** die Probenflüssigkeit eine biologische Flüssigkeit, vorzugsweise Blut, ist.

## Claims

1. A method for the detection of a gas bubble, preferentially an air bubble, in an aqueous liquid, preferentially a calibrating-, control- or sample fluid, which gas bubble is in at least partial contact with the sensitive region of an amperometric sensor which is placed in a measuring chamber and is designed for determining the concentration of a gaseous component dissolved in the liquid, wherein
- the liquid is positioned in the measuring chamber and, after a predetermined response time, in an amperometic measurement at least one first measurement value of the gas component to be determined is taken from a first portion of the liquid, which is located in the sensitive region of the sensor, and
- the liquid is moved along in the measuring chamber, such that a second portion of the liquid, which had previously been located outside the sensitive region of the amperometric sensor, is positioned in the sensitive region, whereby in an amperometic measurement at least one second measurement value of the gas component to be determined is taken, and
- from the difference of the measured values of the gas component to be determined the presence or absence of a gas bubble is inferred.

2. A method according to claim 1, wherein the liquid may be inferred to be free of bubbles in the region of the amperometric sensor, if the second measured value is higher by a predetermined amount than the first measured value.

3. A method according to claim 1 or 2, wherein the second portion of the liquid may be moved to the sensitive region of the sensor in a measuring chamber with open inlet and outlet without significant change in pressure, preferably by a pumping or suction device.

4. A method according to any of claims 1 to 3, wherein the amperometric sensor is an O₂ sensor.

5. A method according to any of claims 1 to 4, wherein the sample liquid is a biological fluid, preferentially blood.

## Revendications

1. Procédé pour la détection d'une bulle de gaz, de préférence une bulle d'air, dans un liquide aqueux, de préférence un liquide d'étalonnage, de contrôle ou de test, laquelle bulle de gaz est en contact au moins partiel avec la zone sensible d'un capteur ampèremétrique disposé dans une chambre de mesure pour la détermination de la concentration d'un constituant gazeux dissous dans le liquide, **caractérisé en ce que**
◆ le liquide est positionné dans la chambre de mesure et, après un temps de réglage prédéterminé, au moins une première valeur de mesure du constituant gazeux à déterminer est détectée avec une mesure ampèremétrique par une première partie du liquide qui se trouve dans la zone sensible du capteur ampèremétrique,
◆ le liquide dans la chambre de mesure continue de se déplacer de sorte qu'une deuxième partie du liquide se trouvant au préalable à l'extérieur de la zone sensible du capteur ampèremétrique est positionnée dans la zone sensible de celui-ci, une deuxième valeur de mesure du constituant gazeux à déterminer étant détectée avec une mesure ampèremétrique et
◆ la différence entre les valeurs de mesure du constituant gazeux à déterminer permet de déduire la présence ou l'absence d'une bulle de gaz.

2. Procédé selon la revendication 1, **caractérisé en ce que**, en cas d'élévation d'une valeur prédéterminée de la deuxième valeur de mesure par rapport à la première valeur de mesure, on en déduit qu'un liquide sans bulle se trouve dans la zone du capteur ampèremétrique.

3. Procédé selon la revendication 1 ou 2, **caractérisé en ce que** la deuxième partie du liquide est déplacée devant la zone sensible du capteur ampèremétrique lorsque la chambre de mesure est ouverte du côté de l'admission et de l'échappement sans variation de pression importante, de préférence à l'aide d'un dispositif de pompage ou d'aspiration.

4. Procédé selon l'une quelconque des revendications 1 à 3, **caractérisé en ce que** le capteur ampèremétrique est un capteur de O₂.

5. Procédé selon l'une quelconque des revendications 1 à 4, **caractérisé en ce que** le liquide de test est un liquide biologique, de préférence du sang.
